# EUROPEAN PATENT APPLICATION

(11) **EP 1 349 311 A1**
(43) Date of publication of application: **01.10.2003**
(21) Application number: 02360095.0
(22) Date of filing: 21.03.2002
(51) Int. Cl.: H04J 14/08, H04B 10/152, H04Q 11/00

(54) **Optical packet time-compressor with delay loop for high-speed transmissions**

(71) Applicant: ALCATEL, 75008 Paris (FR)
(72) Inventor: Veith, Gustav, Dr., 75378 Bad Liebenzell (DE)
(74) Representative: Brose, Gerhard, Dipl.-Ing.

(57) **Abstract**

The invention relates to a method of transmitting optical packets on an optical high speed optical transmission link (OF) comprising the steps of coupling the optical pulses of one optical packet (S2) by actively switching said optical pulses from an access optical line (AL) to a first delay line loop (OF, OF') for time compression of said optical packet, coupling the compressed optical packet (S3) by actively switching said optical pulses to said high speed optical transmission link (OF), transmitting the compressed optical packed (S3) over said high speed link (OF), coupling the compressed optical packed (S3) by actively switching said optical pulses to a second delay line loop (OL, OL') for time de-compression of said optical packet and coupling the de-compressed optical packet (S4) by actively switching said optical pulses to a destination optical line (DL), an optical packet transmission system (OS), an optical packet compression unit (2) and an optical packet de-compression unit (3) therefore.

## Description

The invention is based on a method of transmitting optical packets on an optical high speed optical transmission link according to the preamble of claim 1, an optical packet transmission system according to the preamble of claim 8, an optical packet compression unit according to the preamble of claim 9 and an optical packet de-compression unit according to the preamble of claim 10.

To overcome the technological limits of opto-electrical conversion within a communications network, said communication networks will increasingly use so-called all optical signal processing technologies. For example, future core networks (metropolitan area networks, MAN) might be based on all optical networks access nodes at the network borders, which add or drop light signals in exchange with local access networks (local area network, LAN).

The highly dense data traffic in said core networks demands for very high transmission data rates over corresponding transmission links. Data of several access networks thus has to be bundled or multiplexed before being transmitted over said core network. One solution widely used in modern optical networks is the so-called wavelength-division multiplex (WDM) method. In WDM transmission systems, a certain number of modulated optical carriers with each having a different carrier frequency are simultaneously transmitted in the optical waveguide. Thus, on a single optical fiber, a corresponding number of so-called WDM channels, each constituting an independent data channel, is established to both guarantee flexibility and exploit the transmission capacity of said optical fiber.

A widely used method of data multiplexing in a single optical channel or separately in each of the WDM channels of a WDM system is the so-called time division multiplex (TDM) method. In TDM transmission systems like SONET (Synchronous Optical NETwork) or SDH (Synchronous Digital Hierarchy), the access to the transmission line is shared by several access lines assigning fixed time slots in cyclical order. The data streams of said access lines are each fetched one byte after the other in said cyclical order. Thus, relations between different communication devices are connection oriented showing relatively slow flexibility to adapt actual communications demands.

An existing development direction leads from continuous data exchange to packet-oriented data signals. Up to now, in commercial systems, packet or cell switching currently is still performed exclusively in the electrical domain. Commonly, the internet protocol (IP) data transport is carried out over SDH (Synchronous Digital Hierarchy) networks or SONET (Synchronous Optical NETwork). This requires extensive overhead processing of IP packet frame information.

Recently, high-speed optical networks with optical packet switching methods are successfully implemented in research and pilot projects. There is no overhead processing necessary in electrical higher layers of the corresponding OSI (Open System Interconnect) network model defined by International Standard Organization.

US 5,121,240 in this context shows a system and a method for transmitting optical packets with an "electronic" data rate over a high speed optical line by compressing said optical packets before transmission in a first recirculation optical delay line and decompressing the corresponding de-compressed packets in a second recirculation optical delay line. The second recirculation optical delay line is directly connected to a photo conductive switch, that is triggered by a synchronised mode locked laser signal to gain back the original packets. The laser generates short optical pulses with a repetition rate that corresponds to said electronic data rate. However, due to the photo conductive switch, the original packets are recovered in form of electrical signals. To forward these packets to further optical access networks, the corresponding electrical signal must be reconverted to optical signals.

The object of the invention is to propose a method and a corresponding optical packet transmission system compressing optical packets before and de-compressing after transmission in the optical domain without any electro-optical conversion.

The objective is achieved by a method according to the teaching of claim 1, an optical packet transmission system according to the teaching of claim 8, an optical packet compression unit according to the teaching of claim 9 and an optical packet de-compression unit according to the teaching of claim 10.

The basic idea of the invention is to couple the optical pulses of one optical packet from an access optical line by actively switching said optical pulses to a first delay line loop for compression of said optical packet, further to couple the compressed optical packet into said delay line loop by actively switching the corresponding optical pulses to the high speed optical transmission link, further, after transmission, to couple the compressed optical packed by actively switching said optical pulses to a second delay line loop for time de-compression of said optical packet and finally to couple the de-compressed optical packet by actively switching said optical pulses to a destination optical line.

Further developments of the invention can be gathered from the dependent claims and the following description.

In the following the invention will be explained further making reference to the attached drawings in which:
- Fig.1a: schematically shows a first embodiment an optical packet transmission system according to the invention,
- Fig.1b: shows an example of an optical packet transmitted on said optical packet transmission system describing the temporal behaviour of corresponding signals at different stages,
- Fig.2a: shows a first embodiment of an optical packet compression unit according to the invention,
- Fig.2b: shows a second embodiment of an optical packet compression unit according to the invention,
- Fig.3a: shows a first embodiment of an optical packet de-compression unit according to the invention,
- Fig.3b: shows a second embodiment of an optical packet de-compression unit according to the invention and
- Fig.4: schematically shows a further embodiment of an optical packet transmission system according to the invention.

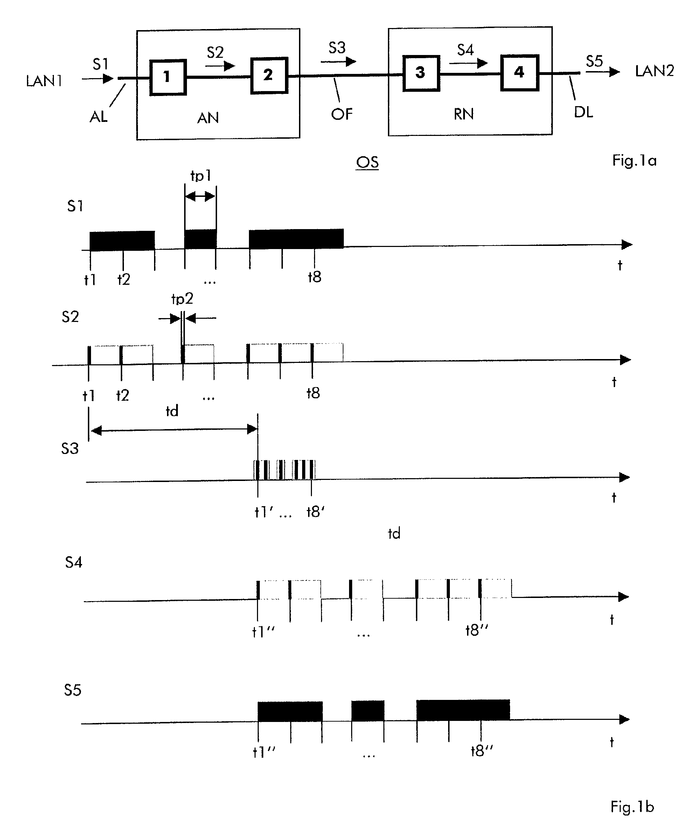

Fig.1a schematically shows an optical packet transmission system OS according to the invention with an optical access node AN according to the invention, an optical transmission line OF and an optical distribution node RN according to the invention. The access node AN comprises a first (optical) conversion unit 1 and a compression unit 2 and the distribution node RN comprises a de-compression unit 3 and a second (optical) conversion unit 4. An (optical) input signal or first signal S1, received on an access line AN, from a first local access network LAN1 is fed to the input of the first conversion unit 1. The first conversion unit output signal or second signal S2 is fed to the input of the compression unit 2 connected to the output of said first conversion unit 1. The compressing unit output signal or third signal S3 is transmitted of optical transmission line OF to the input of the de-compression unit 3 of the distribution node RN. The de-compression unit output signal or forth signal S4 is fed to input of the second conversion unit 4, connected to the output of said de-compression unit 3. The second conversion unit output signal or fifth signal S5 finally is forwarded, on a distribution line or destination line DL, to a second local access network LAN2.

The transmission line OF represents an optical link e.g. of a core or metro network. The access node AN represents one of a plurality of nodes each collecting optical data packets of one or more access networks or local area networks LAN1 and LAN2, transmitting each of said data packets over an optical link of said core network to a specific distribution node to forward the packet to the destined data sink or optical receiver within a specific local area network. In the following, a simple example of forwarding one data packet from the first access network LAN to the second access network LAN 2 will be described in details.

The signals S1 - S5, each carry the same data packet, but the data packets are realised by packets of different duration and optical pulses of different forms. By way of example, the pulses of the first signal S1 received from the first local access network LAN1, shows a so-called non-return-to-zero (NRZ) format. Commonly used pulse formats in optical systems are the said NRZ format and the return-to-zero (RZ) format. NRZ pulses, in an ideal case, show rectangular shape, with a duration similar to the bit duration of a corresponding NRZ signal. Since such a signal does not return to zero for a successive transmission of bits showing the value "1", it is referred to as non return-to-zero signal. The pulse duration of an RZ like signal, in contrast, commonly is significantly shorter than the bit duration of said NRZ like signal.

The first conversion unit 1 converts the NRZ like pulses of said first signal S1 to RZ like pulses of the second signal S2. If the first signal S1 represents already an RZ coded signal, said conversion unit 1 is to be omitted. The compression unit 2 compresses the packet to form the third signal S3 with a packet duration, that is far smaller than the packet duration of the second signal. Said signal now, as output of the access node AN is transmitted over the optical fiber to the distribution node RN. The de-compression unit 3 then expands the received compressed packet of the third signal S3 to generate the forth signal with a packet duration similar to the packet duration of the first signal, but still showing RZ like pulses. The second conversion unit 4 finally converts the forth signal to generate a fifth signal S5 showing again NRZ like pulses similar to the first signal S1. The second conversion unit 4 can be omitted, if instead of an NRZ coded signal S5 the corresponding RZ coded signal S4 is requested for further processing.

Additionally, the pulses of the RZ coded signal S3 might be further compressed in the access node AN before transmission. Said compression can e.g. be realised by a so-called adiabatic soliton compression method. Accordingly, the RZ pulses of said third signal S3, after transmission, might be expanded in the distribution node RN before conversion into NRZ like pulses.

In the following Fig. 1 b, the temporal behaviour and temporal dependencies of said signals S1- S5, are shown in details by each a diagram. The signals S1- S5, by way of example, each consist of one optical packet, representing a sequence of eight bits. Further, by way of example, the sequence shows the following bit values: "1", "1", "0", "1", "0", "1", "1", "1".

The first diagram shows the first signal S1 plotted over the time t. The first signal S1, as described above, consists of one optical packet, wherein each bit of the value "1" is represented by an optical pulse beginning at the moments t1, t2, t4 , t6, t7 or t8 and each bit of the value "0" at the moments t3 and t5 is represented by periods without any pulse. The pulses show an ideal non return-to-zero (NRZ) format with a NRZ pulse length tp1. The NRZ pulse length tp1 equals to the bit duration time T of said first signal S1.

The second diagram shows the second signal S2 plotted over the time t. The packet duration of the corresponding packet is similar to the packet duration of the first signal S1, but the optical pulses, starting at the same moments t1, t2, t4 , t6, t7 and t8 are converted by the conversion unit 2, realised as NRZ-to-RZ conversion unit, now each shows a return-to-zero (RZ) format with a RZ pulse length tp2, that is far smaller than the NRZ pulse length tp1. NRZ-to-RZ optical conversion is known from the prior art and can be realised e.g. by external modulation of a synchronously mode locked ultra short pulse source.

The third diagram shows the third signal S3 plotted over the time t. The third signal S3 comprises an optical packet, that is compressed compared to the optical packet of the second signal S2. Further, the pulses occurring at the delayed moments t1'-t8' are each delayed by a different time compared to the corresponding pulses of the second signal S2. The first pulse is delayed by a delay time td, which represents the longest delay time here. The last pulse in this example coincides with the last pulse of the second signal S2, thus is not delayed at all.

The forth diagram shows the forth signal S4 plotted over the time t. Said signal S4 comprises an optical packet, that is expanded compared to the compressed packet of the third signal S3, showing the same packet length (and the same pulse duration) as the packet of the second signal S2. Compared now to said signal S2, all pulses of the forth signal S4 at the further delayed moments t1" - t8" are equally delayed by the delay time td.

The fifth diagram shows the fifth signal S5 plotted over the time t. The packet duration of the corresponding packet is similar to the packet duration of the forth signal S4, but the optical pulses, starting at the same further delayed moments t1" - t8" are converted back by the de-compression unit 4 and thus each shows a NRZ format with the (original) NRZ pulse length tp2 of the first signal S1. RZ-to-NRZ optical converters are known form the prior art and can be realised, similarly to the NRZ-RZ converter described above, as optical filter with a planar optical structure.

Fig.2a now shows a first embodiment of an optical compressor or compression unit 2 comprised by an optical access node AN according to the invention. Fig.2a shows a first optical switch SW1 with two optical inputs referred to as first and second input of the first switch I11 and 112 and two optical outputs referred to as first and second output of the first switch A11 and A12, a second optical switch SW2 with one input referred to as input of the second switch 121 and two outputs, referred to as first and second output of the second switch A21 and A22. The second output of the first switch A12 is (optically) connected to the input of the second switch 121 and the first output of the second switch A21 is connected over a delay element D to the second input of the first switch 112. Thus, the first switch S1, the second switch SW2, the delay element D and the respective optical connections form an optical loop OL. An input signal S1 is fed to the first optical input of the first switch I11 and an output signal SO is output by the second output of the second switch A22.

The optical loop OL preferably further comprises an optical amplifier and an optical isolator not shown in the figure. The optical amplifier, e.g. a semiconductor optical amplifier or a fiber optical amplifier, compensates for of light intensity losses and the optical isolator prevents from backward reflections in the optical loop OL.

The first and the second switch SW1 and SW2 are controlled by electrical control signals E1 and E2 respectively. The control signals can exhibit a low voltage value or level L, e.g. 0 Volt, or a high voltage value H, e.g. 5 Volt. Depending on the voltage level of a control signal, a corresponding switch connects the input(s) (each) to a different output. The first switch SW1, by way of example, connects the first (respective) input I11 to the first (respective) output A11 and the second input 112 to the second output A12 (parallel stage), if the first control signal E1 shows a low voltage level L and connects the first input I11 to the second output A12 and the second input I12 to the first output A11 (cross stage), if the first control signal E1 shows a high voltage level H. The second switch SW2 connects the first input 121 to the first output A21 (parallel stage), if the second control signal E2 exhibits the low voltage level L and connects the first input 121 to the second output A22 (cross stage), if the second control signal E2 shows the high voltage level H. The delay element D, e.g. consisting of an optical fiber of a certain length, delays a received optical signal by a corresponding delay time TD.

In the diagram below, the first control signal E1 and the second control signal E2 are plotted over the time t. Both control signals E1 and E2 assumes either a low voltage level L or a high voltage level H. For simplicity reasons a data packet of four bits with a sequence "1", "1", "0", "1" is shown with the corresponding optical pulses occurring at the moments t1, t2 and t4, symbolised as dotted lines in the diagram. At the moments t1, t2, t3 and t4 the first control signal E1 assumes the voltage value H each for a first switching time te1 around said moments.

In this example, the duration of optical packets of the input signal S1 should be compressed to one forth. Thus, the first switching time te1 is chosen to be one forth of the pulse repetition time T of the input signal SI, i.e. 4 * te1 = T. The first switching time te1 is greater than or at least equals to the pulse duration of the RZ like pulses of the input signal SI. The delay time TD is chosen to be three times of the first switching time te1, i.e. TD = 3 * te1.

The second switching time te2 to switch the second switch SW2 assumes the high voltage value H between moment t1+3*TD- te1/2 (similar to t3+ te 1/2) and the moment t4+te1/2.

The pulses occurring at the moments t1- t4 are switched into the loop OL by switching the first switch SW1 into cross stage. The first pulse thus is switched into the loop. As the second switch remains in the parallel stage, the signal is forwarded to the delay element D. After the delay time TD, the pulse passes again the first switch SW1, that now remains in the parallel stage. The first pulse now repeats passing the delay element two further times until the second switch SW2 is switched into the cross stage to pass said pulse to the second output A22. The second pulse of the input signal S1 is switched into the loop to circulate two times before it is passed to the output, the third pulse, not present here due to the "0" value bit is switched into the loop to circulate one time before it is passed to said second output A22 and the forth pulse is directly passed to said second output A22. Thus the first pulse is delayed by the time value 3 * TD, the second time is delayed by the time value 2 * TD, the third pulse (if it was present) is delayed by the time value TD and the forth pulse is passed without delay time. The output signal SO output at said second output A22 thus shows a data packed with a time duration reduced to one fourth compared to the duration of packet within the input signal SI.

Alternatively to the electrical control of the optical switches S1 and S2, said switches are optically controlled by corresponding optical control signals showing two levels of light intensity (high/low or on/off).

The optical switches SW1 and SW2 described above as well as the optical switches SW3-SW6 to be described in the following can be realised on the base of Mach-Zehnder structures.

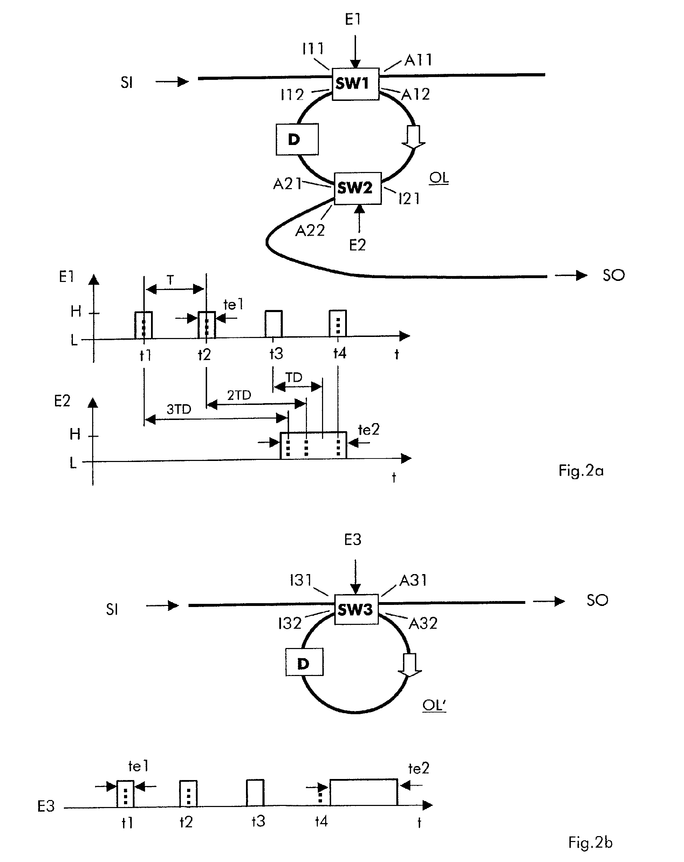

Fig.2b shows a second embodiment of an optical compressor 2 comprised by an optical access node according to the invention. Instead of the loop OL, an alternative loop OL' is shown consisting of only one switch, referred to as third switch SW3, the delay element D similar to the delay element described in Fig.2a and optical connections described below.

The optical switch SW3 shows two optical inputs referred to as first and second input of the third switch I31 and I32 and two optical outputs referred to as first and second output of the third switch A31 and A32. Said second output A32 is (optically) connected over said delay element D to said second input I32. Thus, the third switch SW3, the delay element D and the respective optical connections form an alternative optical loop OL'. The input signal SI is fed to said first optical input I31 and the output signal SO is output by the first output A31.

The third switch SW3 is controlled by a third electrical control signal E3. The control signal, similar to the control signals E1 and E2 described in Fig.2a, can assume a low voltage value L, or a high voltage value H. The third switch SW3 connects the first input I31 to the first output A31 and the second input 132 to the second output A32 (parallel stage), if the respective control signal E3 assumes a low voltage level L and connects the first input I31 to the second output A32 and the second input I32 to the first output A31 (cross stage), if said control signal E3 assumes a high voltage level H.

In the diagram below, the third control signal E3 is plotted over the time t. The same data packet of four bits with a sequence "1", "1", "0", "1" as shown in Fig.2a is shown with the corresponding optical pulses occurring at the moments t1, t2 and t4, symbolised as dotted lines in the diagram. Around the moments t1-t3, i.e. for a time corresponding to the first switching time te1, the third control signals E3 assumes the voltage value H. Around the forth moment t4, the third control signal E1 remains low, but rises to the high value H just after the corresponding pulse has passed the switch, i.e. at the time t4 + te1/2, remaining high until the first pulse of a next packet not shown here pulse has passed the switch. Thus, for packets transmitted in cyclical time order, two short switching periods with a duration similar to the first switching time te1 around each the second and the third pulse of the packets alternate with a long switching period with a duration similar to the second switching time te2 starting behind the each fourth pulse packet until the each first pulse of a following packet.

The pulses occurring at the moments t1 - t3 are switched into the loop OL', as the third switch SW3 is put into the cross stage around said pulses. The first pulse thus is switched into the loop and forwarded to the delay element D. After the delay time TD, the pulse passes again the third switch SW3, that remains in the parallel stage, when arriving. The first pulse now repeats passing the delay element D two further times until it arrives at the third switch SW3 switched into the cross stage to pass said pulse to the first output A31. The second pulse of the input signal SI is switched into the loop to circulate two times before it is passed to the first output A31 and a third pulse, not present here due to the "0" value bit in this example, is switched into the loop to circulate one time before it is passed to the first output A31. As the third switch SW3 remains in the parallel stage when the fourth pulse occurs, said pulse is directly passed to the first output A31.

Thus, similar to the example described under Fig.2a, the first pulse is delayed by the time value 3 * TD, the second pulse is delayed by the time value 2 * TD, the third pulse (if it was present) is delayed by the time value TD and the forth pulse is passed without any delay. The result is an output signal SO with a data packed time duration reduced to one fourth with the first pulse delayed by a time value of 3 * TD.

Fig.3a shows a first embodiment of an optical de-compressor or de-compression unit 3 comprised by an optical distribution node RN according to the invention. The architecture and the elements of the de-compression unit 3 are similar to that of the compression unit 2 of Fig.2a. The de-compression unit 3 differs from the compression unit 2 in, that the switches SW1 and SW2 are controlled (switched) by a fourth control signal E4 and a fifth control signal E5 respectively, that differs from the respective first and the second control signal E1 and E2. Instead of the input signal SI, the output signal of Fig.2a, here referred to as further input signal SI' is fed to the first input of the first switch SW1 and a further output signal SO' is output at the second output of the second switch SW2.

In the diagram below, the fourth control signal E4 and the fifth control signal E5 are plotted over the time t. The data packet received within the further input signal SI' consists, similar to the data packet described under Fig.2a, of four bits with a sequence "1", "1", "0", "1" with the corresponding optical pulses occurring at the first delayed moments t1', t2' and t4', symbolised as dotted lines in the diagram. The fourth signal E4 shows a high voltage level for a time duration similar to the second switching time described in Fig.2a, covering the whole compressed packet. At the second delayed moments t1", t2", t3" and t4" with a grid time (pulse repetition time) similar to the grid time T of the input signal SI of Fig.2a, the fifth control signal E5 assumes the high voltage value H each for a time duration of one fourth of the grid time T (i.e. the first switching time tel) around said second delayed moments t1", t2", t3" and t4".

As the pulses arriving at the first delayed moments t1' - t4' at the first switch SW1, when said switch is put in the cross stage, said pulses are switched together into the loop OL. The first pulse arrives at the second switch SW2 being in the cross stage and is thus passed to the second output of said switch SW2, serving as de-compression unit output. The second pulse arrives at the second switch SW2 being in the parallel stage and is thus passed over the first output of said switch SW2 to the delay element D. After the delay time TD, the first pulse arrives at the second input of the first switch SW1, that now remains in the parallel stage. The second pulse then arrives at the second switch SW2, now switched intro the cross stage, passing said pulse to the de-compression unit output. A third pulse, not present here, would pass two times the delay element D before it would be passed to the de-compression unit output and the fourth pulse passes three times said delay element D before being passed to the de-compression unit output. Thus the first pulse is directly passed, the second pulse is delayed by the time value TD, the third pulse is delayed by the time value 2 * TD, the fourth pulse is delayed by the time value 3 * TD. The result is a further output signal SO' similar to the input signal of the compression unit 2, but delayed by the delay time 3 * TD.

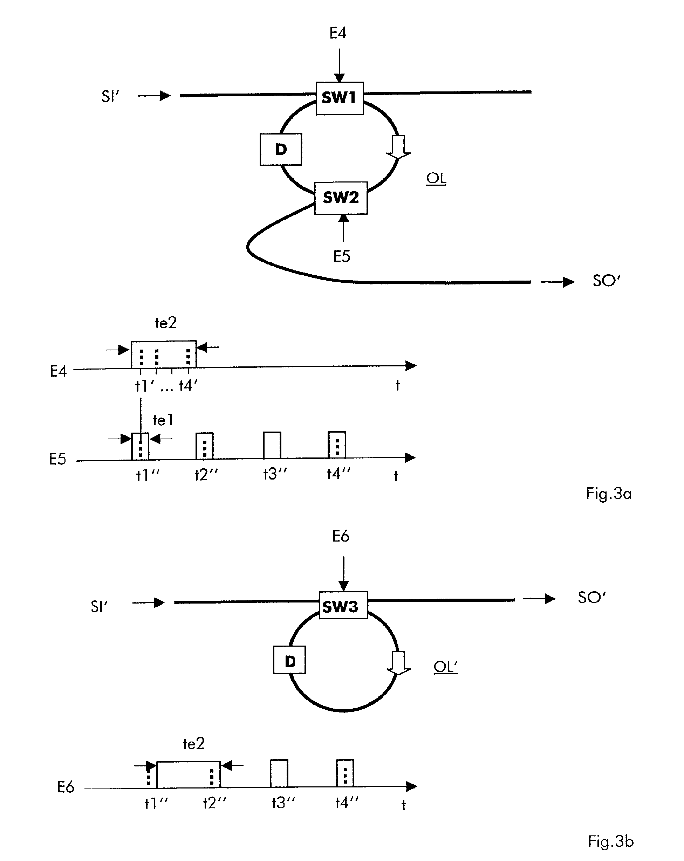

Fig.3b shows a second embodiment of an optical de-compression unit 3 comprised by an optical access node according to the invention. The architecture and the elements of the de-compression unit 3 are similar to that of the compression unit 2 of Fig.2b. The further input and output signals SI' and SO' are similar to those of Fig.3a. The de-compression unit 3 differs from the compression unit 2 in, that the third switch SW3 is controlled by a sixth electrical control signal E6 different form the third control signal E3 plotted over the time t in the diagram below.

The first pulse occurring at the second further delayed first time t1" is directly passed to the output. The second, third (if present) and fourth pulses are switched into the loop OL' (third switch in the cross stage), wherein the second pulse circulates one time, the third pulse circulates two times and the fourth pulse circulates three times before being passed to the output.

Thus, similar to the example described under Fig.3a, the first pulse is not delayed, the second pulse is delayed by the time value TD, the third pulse (if present) is delayed by the time value 2 * TD and the forth pulse is delayed by the time value 3 *. The result is a further output signal SO' similar to the input signal SI of the compression loop, but delayed by the time value of 3 * TD. It can be seen from the drawings, the sixth control signal E6 equals to the third control signal E3, only being shifted on signal against the other signal.

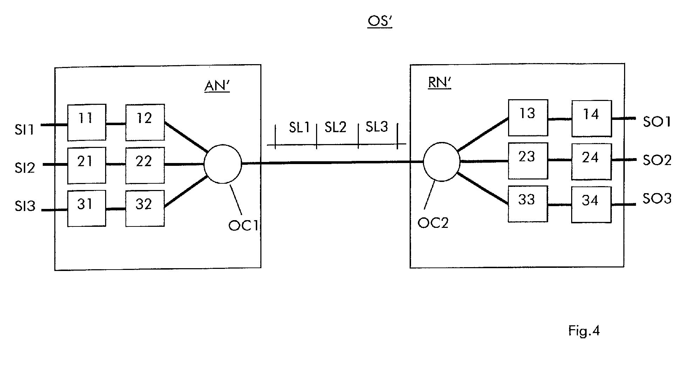

Fig.4 schematically shows a further embodiment of an optical transmission system according to the invention. A modified optical access node AN' is connected via an optical transmission fiber to a further optical distribution node RN'. The further access node AN', by way of example, receives a first, a second and a third optical input signal SI1, SI2 and SI3 at each of a first, second and third NRZ-to-RZ conversion unit 11, 21, 31. Each of the outputs of said conversion units is (optically) is connected to each the input of a first, a second and a third compression unit 12 22, 32 of said access node AN'. The outputs of said compression units are connected to an optical coupler OC1 of said access node. Said optical coupler is connected over said transmission fiber with an optical splitter OC2 of the further distribution node RN'. Each of three outputs of said splitter is connected to a first, a second and a third de-compression unit 13, 23, 33 of said distribution node RN' and each of said de-compression units is connected to each of a first, second and third RZ-to-NRZ conversion unit 14, 24, 34 of said distribution node RN', each of said conversion units providing a first, a second and a third output signal SO1, SO2 and SO3 respectively.

In this example, the transmission fiber is shared by means of time division multiplexing of the input signals SI1, SI2 or SI3 in, that time slots SL1, SL2 or SL3 are cyclically assigned to said input signals. Before compressing the corresponding data packets, the pulses are converted from NRZ format to RZ format as described above. The arriving packets within said input signals are compressed to fit into a corresponding time slot. At the distribution node RN' the compressed data stream is fed, packet by packet, cyclically to subsequent of said de-compression units 13, 23, 33, i.e. the packets are de-multiplexed. Before forwarding the data packets to the according access networks not shown in the figure, the pulses are converted back to NRZ format.

The functions of the above described access nodes AN and AN' and distribution nodes RN and RN' can be combined into one physical unit, serving as interface to one or more access networks LAN1 and LAN2.

The method according to the invention, in a further preferable embodiment, is combined with the WDM transmission method, described in the beginning, to enable a high transmission speed over each of the WDM channels of a corresponding WDM transmission system.

## Claims

1. A method of transmitting optical packets on a high speed optical transmission link (OF), wherein said optical packets are compressed before transmission and de-compressed after transmission, **characterized in, that** the following functions are performed:
• coupling the optical pulses of one optical packet (S2) from an access optical line (AL) by actively switching said optical pulses to a first delay line loop (OF, OF') for compression of said optical packet,
• coupling the compressed optical packet (S3) in said delay line loop (OF, OF') by actively switching the corresponding optical pulses to the high speed optical transmission link (OF),
• transmitting the compressed optical packed (S3) over said high speed link (OF),
• coupling the received compressed optical packed (S3) by actively switching said optical pulses to a second delay line loop (OL, OL') for time de-compression of said optical packet and
• coupling the de-compressed optical packet (S4) by actively switching said optical pulses to a destination optical line (DL).

2. A method according to claim 1, **characterised in, that** the functions further comprise converting non return-to-zero like optical pulses (S1) to return-to-zero like optical pulses (S2) before packet compressing.

3. A method according to claim 2, **characterised in, that** the functions further comprise a pulse compression of said return-to-zero like optical pulses (S2) before packet compressing.

4. A method according to claim 2, **characterised in, that** the functions further comprise converting the return-to-zero like optical pulses (S4) after packet de-compression to non return-to-zero like optical pulses (S5) before packet forwarding to the destination line.

5. A method according to claim 2 and 3, **characterised in, that** the functions further comprise extension of the return-to-zero like optical pulses (S4) before converting the return-to-zero like optical pulses to non return-to-zero like optical pulses (S5).

6. A method according to claim 1, **characterised in, that** two or more optical packets are independently compressed in at least two different delay line loops (12, 22, 32) and optically time multiplexed before transmission.

7. A method according to claim 1, **characterised in, that** a plurality of compressed optical packets, subsequently transmitted, are received and distributed to at least two different delay line loops (13, 23, 33) for independently de-compressing said packets.

8. An optical packet transmission system (OS) with an optical access node (AN, AN') an optical transmission link (OF) and an optical distribution node (RN, RN'), wherein the access node (AN, AN') comprises a first delay line loop (OL, OL') for compressing a received optical packet and the distribution node (AN, AN') comprises a second delay line loop (OL, OL') for de-compressing a received optical packet, **characterised in, that**
• the first delay line loop (OL, OL') comprises at least one active optical switch (SW1, SW2, SW3) connecting an optical access line to said delay line (OL, OL') and connecting said delay line (OL, OL') to said optical transmission link (OF) and means to generate a corresponding control signal (E1, E2, E3) to switch said at least one active switch (SW1, SW2, SW3) such, that the optical packet is compressed before being transmitted on said transmission link (OF) and
• the second delay line loop (OL, OL') comprises at least one active optical switch (SW1, SW2, SW3) connecting said optical transmission link (OF) to said delay line (OL, OL') and connecting said delay line (OL, OL') to an optical distribution line and means to generate a control signal (E4, E5, E6) to control said at least one active switch (SW1, SW2, SW3) such, that the optical packet is de-compressed before being forwarded to said distribution line.

9. An optical packet compression unit (2) connecting an optical access line to an optical transmission link (OF) and comprising a delay line loop (OL, OL'), **characterised in, that** the delay line loop (OL, OL') comprises at least one active optical switch (SW1, SW2, SW3) connecting said optical access line to said delay line (OL, OL') and connecting said delay line (OL, OL') to said optical transmission link (OF) and means to generate a corresponding control signal (E1, E2, E3) to control said at least one active switch (SW1, SW2, SW3) such, that the optical packet is compressed before being transmitted on said transmission link (OF).

10. An optical packet de-compression unit (3) connecting an optical transmission link (OF) to an optical distribution line and comprising a delay line loop (OL, OL'), **characterised in, that** the delay line loop (OL, OL') comprises at least one active optical switch (SW1, SW2, SW3) connecting said optical transmission link (OF) to said delay line (OL, OL') and connecting said delay line (OL, OL') to said distribution line and means to generate a corresponding control signal (E4, E5, E6) to switch said at least one active switch (SW1, SW2, SW3) such, that the optical packet is de-compressed before being transmitted on said transmission link (OF).
